# EUROPÄISCHE PATENTSCHRIFT

(11) **EP 2 730 771 B1**
(45) Veröffentlichungstag und Bekanntmachung des Hinweises auf die Patenterteilung: **20.09.2017**
(21) Anmeldenummer: 13191623.1
(22) Anmeldetag: 05.11.2013
(51) Int. Cl.: F02K 1/38, F02K 1/48

(54) **Düse für eine Gasturbine mit Leitvorrichtungen**
Nozzle for a gas turbine engine with baffles
Buse pour moteur à turbine à gaz dotée de dispositifs de guidage

(30) Priorität: 08.11.2012 DE 102012220358
(43) Veröffentlichungstag der Anmeldung: 14.05.2014
(73) Patentinhaber: Rolls-Royce Deutschland Ltd & Co KG, 15827 Blankenfelde-Mahlow (DE)
(72) Erfinder: Rose, Marco, 09599 Freiberg (DE); Spieweg, Rene, 14197 Berlin (DE)
(74) Vertreter: Maikowski & Ninnemann Patentanwälte Partnerschaft mbB

(56) Entgegenhaltungen:
- US-A- 3 113 428
- US-A- 3 514 955
- US-A1- 2004 255 573
- US-A1- 2011 014 038
- US-B1- 6 276 127

## Beschreibung

Die Erfindung betrifft eine Düse für eine Gasturbine mit Leitvorrichtungen gemäß dem Oberbegriff des Patentanspruchs 1. Eine solche Düse findet insbesondere Verwendung in einem Flugzeugtriebwerk.

Beim Startvorgang eines Flugzeuges stellt der Antriebsstrahl eine erhebliche Schallquelle dar. Dabei tragen zur Schallerzeugung stabile, kohärente Wirbelstrukturen bei, die sich in den Scherschichten des Freistrahls bilden. Zur Minderung des Strahllärms sind zahlreiche passive und aktive Maßnahmen bekannt.

Die gattungsbildende EP 2 072 793 A2 beschreibt eine Düse mit Leitelementen, bei der am Düsenrand alternierend diffusorartige und düsenartige Leitelemente ausgebildet sind. Die Leitelemente bilden dabei in Strömungsrichtung abwechselnd konvergierende und divergierende Trapeze. Durch solche Leitelemente wird das ausströmende Medium am Düsenrand, wo das ausströmende Medium auf das umgebende Medium trifft, verwirbelt. Die dabei entstehenden Axial- und Radialwirbel schwächen dabei die stabilen, kohärenten und lärmerzeugenden Wirbelstrukturen und führen somit zu einer verminderten Lärmerzeugung im Antriebsstahl.

Weitere Düsen mit Leitvorrichtungen sind in der US 6 276 127 B1 und US 2011/014038 A1 beschrieben.

Es besteht ein fortlaufender Bedarf, eine weitere Minderung des Strahllärms von Flugzeugen bei gleichzeitig geringen aerodynamischen Verlusten bereitzustellen.

Dementsprechend liegt der vorliegenden Erfindung die Aufgabe zugrunde, eine Düse mit Leitelementen bereitzustellen, die eine weitere Verminderung der durch den Antriebsstrahl erzeugten Schallemissionen bereitstellt, bei gleichzeitig geringen aerodynamischen Verlusten.

Diese Aufgabe wird erfindungsgemäß durch eine Düse mit den Merkmalen des Anspruchs 1 gelöst. Ausgestaltungen der Erfindung sind in den Unteransprüchen angegeben.

Danach sieht die erfindungsgemäße Lösung eine Düse für eine Gasturbine mit einer Düsenmantelfläche und einem Düsenrand vor, an dem in Umfangsrichtung abwechselnd erste und zweite Leitvorrichtungen angeordnet sind. Die ersten Leitvorrichtungen sind düsenartig ausgebildet und bilden einen offenen, konvergierenden Kanal. Die zweiten Leitvorrichtungen sind diffusorartig ausgebildet und bilden einen offen, divergierenden Kanal. Hierzu weisen die ersten Leitvorrichtungen jeweils eine erste azimuthale Leitwand und zwei Leitelemente auf, wobei die erste azimuthale Leitwand eine erste Abströmkante und zwei erste Kanten zu den Wandelementen ausbildet. Ebenso weisen die zweiten Leitvorrichtungen jeweils eine zweite azimuthale Leitwand und zwei Leitelemente auf, wobei die zweite azimuthale Leitwand eine zweite Abströmkante und zwei Kanten zu den Wandelementen ausbildet.

Die ersten und die zweiten Leitwände sind bezogen auf die Strömungsrichtung am Düsenrand in unterschiedlicher Weise geneigt, wobei die ersten Leitwände radial auswärts geneigt und die zweiten Leitwände radial einwärts geneigt sind oder umgekehrt. Dies bedeutet, dass die düsenartig ausgebildeten Leitvorrichtungen innenliegend, d. h. zum Strahl und die diffusorartigen Leitvorrichtungen nach außen zur Umgebungsströmung ausgerichtet sind, oder dass die diffusorartigen Leitvorrichtungen innenliegend, d. h. zum Strahl und die düsenartigen Leitvorrichtungen nach außen zur Umgebungsströmung ausgerichtet sind.

Ein Wandelement verbindet jeweils eine erste Leitvorrichtung und eine zweite Leitvorrichtung und ist dabei Teil beider Leitvorrichtungen. Dabei gilt, dass jedes Wandelement eine erste Kante zu einer der ersten Leitwände, eine zweite Kante zu einer der zweiten Leitwände und eine stirnseitige Abströmkante aufweist. Die beiden Kanten eines Wandelementes divergieren in axialer Richtung. Bei der erfindungsgemäßen Düse konvergieren und divergieren benachbarte Wandelemente abwechselnd und paarweise in axialer Richtung. Ein betrachtetes Wandelement bildet somit mit seinem einen Nachbarn einen konvergenten Kanal und mit seinem anderen Nachbarn einen divergenten Kanal. Der gekrümmte Verlauf der Wandelemente führt dabei dazu, dass bei den düsenartig ausgebildeten Leitvorrichtungen aufgrund der Krümmung im gekrümmten Bereich die Konvergenz zunimmt, während bei den diffusorartig ausgebildeten Leitvorrichtungen im gekrümmten Bereich die Divergenz zunimmt.

Erfindungsgemäß ist vorgesehen, dass bei einer solchen Düse die Wandelemente in axialer Richtung einen gekrümmten Verlauf besitzen. Der Verlauf der Wandelemente ist somit nicht in rein axialer Richtung, sondern besitzt zusätzlich eine Komponente in Umfangsrichtung, deren Größe von der axialen Position abhängt, also eine Funktion der axialen Position (x) ist.

Die erfindungsgemäße Lösung erzeugt aufgrund der bereitgestellten düsenartigen und diffusorartigen Leitvorrichtungen eine lokale Beschleunigung und Verzögerung der vom Düsenrand abgehenden Strömung im Bereich der Strahlaustrittskante. Hierdurch werden Axial- und Radialwirbel stromab der Düse generiert, die mit den stabilen Ringwirbeln, die für eine Lärmerzeugung maßgeblich verantwortlich sind, interagieren. Diese verformen sich schließlich und dissipieren. Die großen, tieffrequenten und lärmerzeugenden Wirbelstrukturen werden in kleine Wirbelstrukturen zerschlagen, deren abgestrahlter, hochfrequenter Lärm besser atmosphärisch absorbiert wird.

Gleichzeitig führt die erfindungsgemäße Lösung zu einer weiteren Verringerung der Strömungsverluste durch eine verbesserte Strömungsführung am Eintritt, an der Abströmkante und an den Wandelementen bzw. Seitenwänden der Leitvorrichtungen. Hierdurch wird eine Ablösung der Strömung an den Wänden der betrachteten Elemente verzögert oder sogar vermieden. Dies führt zu einer Reduktion der aerodynamischen Verluste der erfindungsgemäßen Düse.

Die erfindungsgemäße Lösung ist darüber hinaus robust, wartungsarm sowie gewichtsneutral. Sie benötigt keine beweglichen Teile, keine Steuerung und keine gesonderte Energieversorgung. Sie ist damit auch kostengünstig.

Die erfindungsgemäße Düse kann bei allen Düsentypen angewendet werden, insbesondere auch an einer Düse mit einer Kernstromdüse und einer Nebenstromdüse. Die Leitvorrichtungen können integrierter Bestandteil der Düse sein, insbesondere aus Segmenten der Düsenmantelfläche gebildet sein, oder als Nachrüstsatz nachträglich an der Düsenmantelfläche befestigt werden.

Es wird darauf hingewiesen, dass die Aussage, dass die Wandelemente in axialer Richtung einen gekrümmten Verlauf besitzen, der Aussage entspricht, dass die beiden Kanten eines Wandelementes, die diese mit einer ersten Leitwand einer ersten Leitvorrichtung und einer zweiten Leitwand einer zweiten Leitvorrichtung ausbildet, einen gekrümmten Verlauf besitzen. Bei ausschließlich radialer Anordnung der Wandelemente liegen diese beiden Kanten dabei in radialer Richtung übereinander. Für den Fall, dass die Wandelemente schräg in dem Sinne verlaufen, dass sie zusätzlich eine Komponente in Umfangsrichtung besitzen, sind die gekrümmt verlaufenden Kanten dagegen in Umfangsrichtung beabstandet.

Gemäß einer Ausgestaltung der Erfindung verlaufen die Wandelemente angrenzend an die Düsenmantelfläche in axialer Richtung im Wesentlichen geradlinig, d. h. die Eingangskrümmung ist möglichst klein oder gleich Null. Dies bedeutet, dass die Wandelemente im Wesentlichen senkrecht auf der Kante stehen, die den Übergang von der Düsenmantelfläche zu den Leitvorrichtungen definiert.

Eine weitere Ausgestaltung der Erfindung sieht vor, dass die Wandelemente angrenzend an ihre stirnseitige Abströmkante in axialer Richtung im Wesentlichen geradlinig verlaufen. Für diesen Fall ist die Ausgangskrümmung der Wandelemente an der in Strömungsrichtung hinteren Kante ebenfalls möglichst klein oder gleich Null. In einer alternativen Ausgestaltung kann dagegen vorgesehen sein, dass die Wandelemente eine Krümmung aufweisen, die angrenzend an die stirnseitige Abströmkante einen endlichen Wert annimmt. Die Ausgangskrümmung der Wandelemente ist für diesen Fall ungleich Null. Entsprechend den beiden genannten Ausführungsvarianten können die Wandelemente somit in einem Winkel gleich 90° oder verschieden von 90° zu den Abströmkanten der Leitvorrichtungen verlaufen.

Eine erste Kombination der genannten Verläufe führt zu einer Ausgestaltung, bei der die Wandelemente angrenzend an die Düsenmantelfläche und angrenzend an ihre stirnseitige Abströmkante in axialer Richtung im Wesentlichen geradlinig und zwischen diesen Bereichen gekrümmt verlaufen. Ein düsenartige Strömungskanal weist somit in axialer Richtung zunächst eine konstante Breite, dann eine sich verjüngende Breite und angrenzend an die Abströmkante wieder eine konstante Breite auf, wobei sich der Begriff "Breite" auf die Umfangsrichtung bezieht. In entsprechender Weise weist ein diffusorartiger Strömungskanal in axialer Richtung zunächst eine konstante Breite, dann eine divergente Breite und angrenzend an die Abströmkante wiederum eine konstante Breite auf.

Die Wandelemente bewirken bei diesem Ausführungsbeispiel am Eintritt und an der Austrittskante eine Strömungsführung im Wesentlichen in axialer Richtung, während sie dazwischen gekrümmt verlaufen. Hierzu kann vorgesehen sein, dass die Abströmkante einen Wendepunkt ihrer Krümmung erfährt.

Eine zweite Kombination der genannten Verläufe führt zu einer Ausgestaltung, bei der die Wandelemente lediglich angrenzend an die Düsenmantelfläche geradlinig verlaufen und in ihrem weiteren Verlauf stromabwärts eine Krümmung erfahren. Diese Krümmung ist gemäß einem Ausführungsbeispiel derart, dass die Krümmung in einem Wendepunkt der Wandelemente auf Null fällt und daran anschließend einen endlichen Wert annimmt, so dass an der Abströmkante eine Krümmung ungleich Null ist. Der düsenartige Strömungskanal weist somit in axialer Richtung zunächst eine konstante Breite und dann eine sich verjüngende Breite auf, wobei an der Abströmkante ein Abströmwinkel ungleich Null realisiert ist. In entsprechender Weise weist ein diffusorartiger Strömungskanal in axialer Richtung zunächst eine konstante Breite und dann eine divergente Breite auf, wobei an der Abströmkante an Abströmwinkel ungleich Null realisiert ist.

Gemäß einer weiteren Ausführungsvariante sind die Wandelemente in ihrem axialen Verlauf zwischen einem Anfangspunkt, der an die Düsenmantelfläche angrenzt, und ihrer stirnseitigen Abströmkante stetig gekrümmt, d. h., die Wandelemente laufen an ihrer stirnseitigen Abströmkante nicht tangential aus, sondern besitzen auch dort eine Krümmung. Dementsprechend weist ein düsenartiger Strömungskanal eine Breite auf, die sich ausgehend von einer Anfangsbreite in axialer Richtung fortlaufend reduziert. In entsprechender Weise weist ein diffusorartiger Strömungskanal eine Breite auf, die sich in axialer Richtung von einer Anfangsbreite fortlaufend vergrößert. Der Grad der Krümmung kann in Abhängigkeit von der axialen Position (x) variieren, wobei unterschiedliche Verläufe bereitgestellt werden könnten.

Gemäß einer Ausgestaltung der Erfindung ist vorgesehen, dass das Produkt aus dem Betrag der maximalen Krümmung k der Wandelemente mit dem Durchmesser des Düsenrands im Bereich zwischen 0,002 und 0,05 liegt. Es gilt somit: k*d = 0,002 - 0,05. Dies bedeutet bei einem beispielsweise angenommenen Durchmesser d am Düsenaustritt von 1 m, dass der Krümmungsradius, der der Kehrwert der Krümmung ist, im Bereich zwischen 20 m und 500 m liegt. Die Krümmung ist insgesamt somit relativ gering und führt nicht notwendigerweise dazu, dass sie mit dem menschlichen Auge erkennbar ist.

Gemäß einem weiteren Ausführungsbeispiel liegt der Quotient von Länge I der Leitvorrichtungen zu Breite b der Leitvorrichtungen im Bereich zwischen 0,2 und 1. Es gilt somit die Beziehung: l/b = 0,2 - 1,0.

Eine weitere Ausgestaltung sieht vor, dass die relative Teilung der Düsenelemente auf dem Düsenumfang, d. h. der Quotient von Breite b der Leitvorrichtungen zum Durchmesser d des Düsenrandes im Bereich zwischen 0,15 und 0,6 liegt. Es gilt die Beziehung: b/d = 0,15 - 0,6. Der Begriff der "Breite" der Leitvorrichtungen wird dabei auf Paar benachbarter Wandelemente bezogen.

Die Wandelemente, die jeweils eine erste Leitvorrichtung und eine zweite Leitvorrichtung miteinander verbinden, verlaufen gemäß einer Ausführungsvariante in radialer Richtung, d. h., sie sind senkrecht zu der Düsenmantelfläche ausgerichtet. Jedoch kann in alternativen Ausführungsvarianten ebenfalls vorgesehen sein, dass die Wandelemente schräg verlaufen, wobei sie eine radiale Komponente und eine Komponente in Umfangsrichtung aufweisen. Eine schräge Anordnung der Wandelemente führt dazu, dass die durch die ersten und zweiten Leitvorrichtungen bereitgestellten Kanäle sich in radialer Richtung verjüngen oder verbreitern. Dies kann zu einer zusätzlichen Verwirbelung am Düsenrand führen.

Die Erfindung wird nachfolgend unter Bezugnahme der Zeichnung anhand mehrerer Ausführungsbeispiele näher erläutert. Es zeigen:
- Figur 1: ein erstes Ausführungsbeispiel erster und zweiter Leitvorrichtungen einer erfindungsgemäßen Düse;
- Figur 2: eine perspektivische Detailansicht erster und zweiter Leiteinrichtungen der Düse der Figur 1;
- Figur 3: eine Draufsicht auf den in Umfangsrichtung abgerollten Düsenrand einer Düse mit ersten und zweiten Leitvorrichtungen gemäß den Figuren 1 und 2;
- Figur 3A: ein erstes Ausführungsbeispiel für einen Krümmungsverlauf bei einer Leitvorrichtung entsprechend der Figur 3;
- Figur 3B: ein zweites Ausführungsbeispiel für einen Krümmungsverlauf bei einer Leitvorrichtung entsprechend der Figur 3;
- Figue 3C: ein drittes Ausführungsbeispiel für einen Krümmungsverlauf bei einer Leitvorrichtung entsprechend der Figur 3;
- Figur 4: eine perspektivische Detailansicht erster und zweiter Leiteinrichtungen eines zweiten Ausführungsbeispiels einer erfindungsgemäßen Düse;
- Figur 5: eine Draufsicht auf den in Umfangsrichtung abgerollten Düsenrand einer Düse mit ersten und zweiten Leitvorrichtungen gemäß der Figur 4;
- Figur 6: eine perspektivische und schematische Ansicht eines ersten Ausführungsbeispiels einer Düse mit ersten und zweiten Leiteinrichtungen gemäß dem Stand der Technik; und
- Figur 7: eine perspektivische und schematische Ansicht eines zweiten Ausführungsbeispiels einer Düse gemäß dem Stand der Technik.

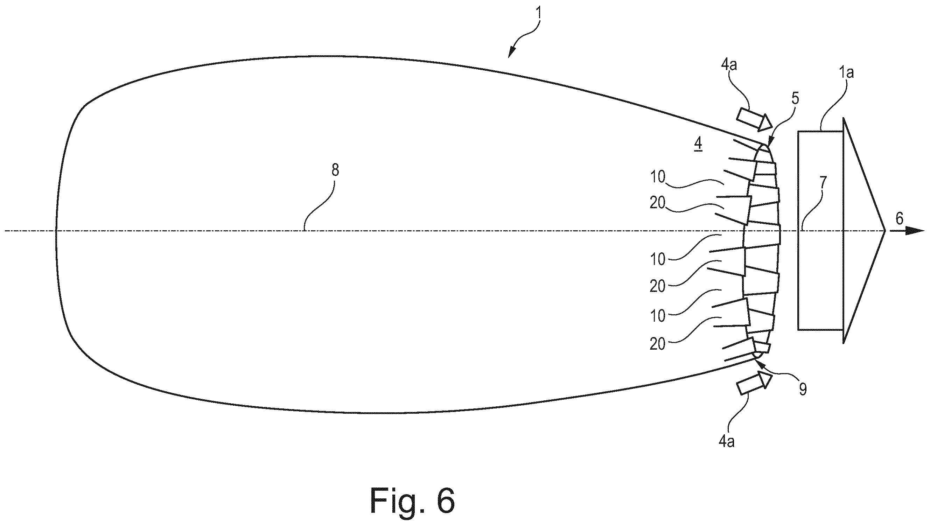

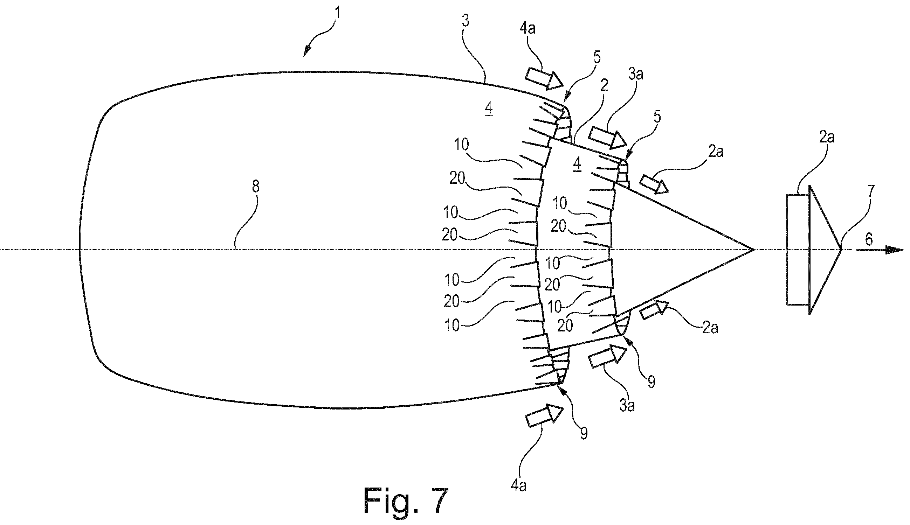

Zum besseren Verständnis des Hintergrunds der vorliegenden Erfindung werden zunächst anhand der Figuren 6 und 7 zwei Ausgestaltungen einer Düse mit ersten und zweiten Leitvorrichtungen gemäß dem Stand der Technik erläutert.

Die Figur 6 zeigt eine Düse 1 mit einer Düsenmantelfläche 4 sowie ersten Leitvorrichtungen 10 und zweiten Leitvorrichtungen 20, die an einem Düsenrand mit einer Strahlaustrittskante 5 ausgebildet sind. Die ersten Leitvorrichtungen 10 konvergieren in Strömungsrichtung 6 und sind radial nach innen geneigt, während die zweiten Leitvorrichtungen 20 in Strömungsrichtung 6 divergieren und radial nach außen geneigt sind. Eine umgekehrte Ausbildung ist ebenfalls möglich. Die Strahlachse 7 bildet in Strömungsrichtung 6 eine Verlängerung der Mittellinie 8 der Düse 1. Die Mittellinie 8 der Düse kann identisch mit der Mittelinie der Turbine sein (wie dargestellt), davon aber auch geringfügig abweichen.

Im Betrieb tritt ein Antriebsstrahl 1a an der Strahlaustrittskante aus der Düse aus. Eine Außenströmung 4a verläuft entlang der Düsenmantelfläche 4.

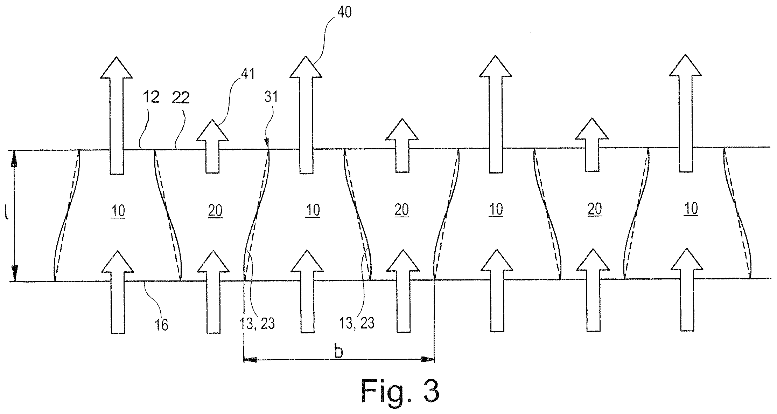

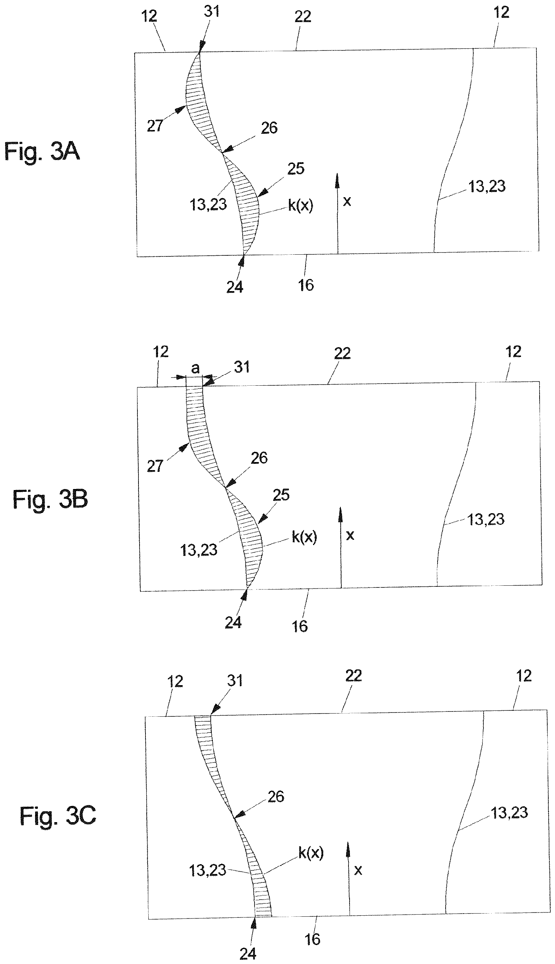

Die Figur 7 zeigt eine Düse 1, die eine Kernstromdüse 2 und eine Nebenstromdüse 3 umfasst. Die Kernstromdüse 2 und die Nebenstromdüse 3 weisen jeweils eine Düsenmantelfläche 4 mit einer Strahlaustrittskante 5 sowie erste Leitvorrichtungen 10 und zweite Leitvorrichtungen 20 an Düsenrändern 9 mit zugehörigen Strahlaustrittskanten 5 auf. Wie in der Figur 3 konvergieren die ersten Leitvorrichtungen 10 in Strömungsrichtung 6 und sind radial nach innen geneigt, während die zweiten Leitvorrichtungen 20 in Strömungsrichtung 6 divergieren und radial nach außen geneigt sind. Alternativ sind die ersten Leitvorrichtungen 10 radial nach außen und die zweiten Leitvorrichtungen 20 radial nach innen geneigt. Die Strahlachse 7 bildet in Strömungsrichtung 6 eine Verlängerung der Mittellinie 8 der Düse 1. Die Mittellinie 8 der Düse kann identisch mit der Mittelinie der Turbine sein (wie dargestellt), davon aber auch geringfügig abweichen.

Im Betrieb tritt im Ausführungsbeispiel der Figuren 7 ein heißer Kernstrom 2a aus der Kernstromdüse 2 aus. Ein kalter Nebenstrom 3a tritt aus der Nebenstromdüse 3 aus. Die Außenströmung 4a verläuft entlang der Düsenmantelfläche 4 der Nebenstromdüse 3.

Eine Anordnung entsprechend den Figuren 6 und 7 ist in der EP 2 072 793 A2 beschrieben, auf die insofern ergänzend Bezug genommen wird.

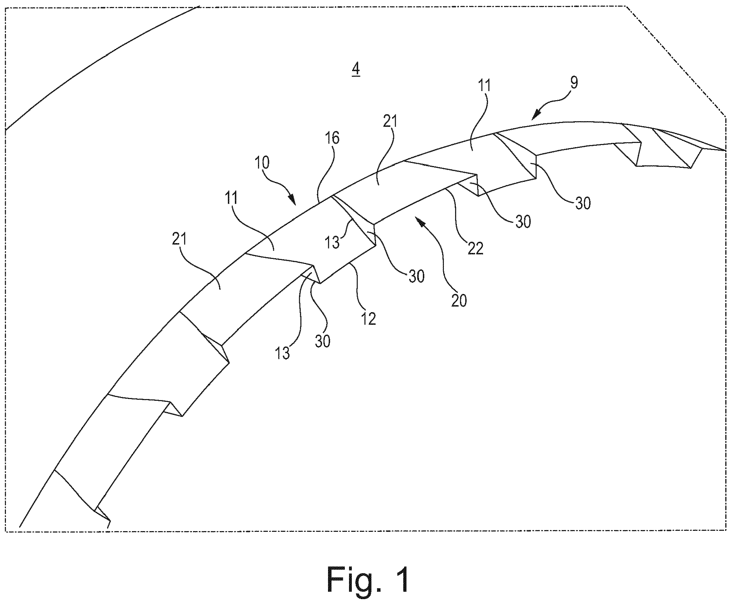

Die Figur 1 zeigt ein erstes Ausführungsbeispiel eines erfindungsgemäß ausgebildeten Düsenrandes mit ersten, düsenartig ausgebildeten Leitvorrichtungen 10 und zweiten, diffusorartigen Leitvorrichtungen 20, die zur Verringerung von Strömungsverlusten in anderer Weise als gemäß den Figuren 6 und 7 ausgebildet sind.

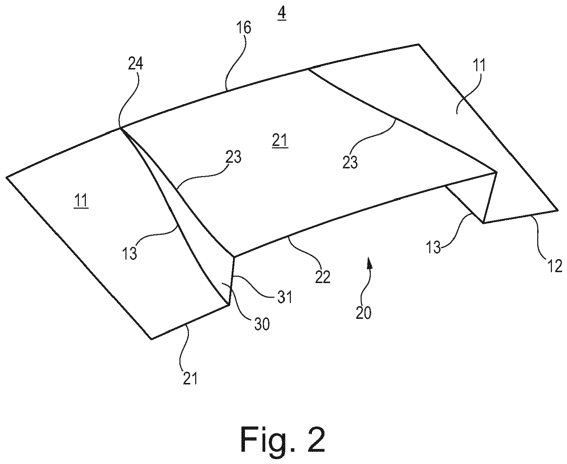

Gemäß den Figuren 1 und 2 wird der Düsenrand 9 aus ersten Leitvorrichtungen 10 und zweiten Leitvorrichtungen 20 gebildet. Die ersten Leitvorrichtungen 10 bilden einen düsenartigen Kanal und die zweiten Leitvorrichtungen 20 einen diffusorartigen Kanal aus. Hierzu umfassen die ersten Leitvorrichtungen 10 jeweils eine (erste) azimuthale Leitwand 11 und zwei daran in Umfangsrichtung benachbart angrenzende Wandelemente 30. Die azimuthale Leitwand 11 wird dabei durch vier Begrenzungslinien bzw. Kanten begrenzt. Eine erste, in Strömungsrichtung gesehen axial vordere, azimuthal verlaufende Kante wird durch eine in Umfangsrichtung verlaufende Kante 16 gebildet, die an die Düsenmantelfläche 4 angrenzt und in axialer Richtung den Beginn der Leitelemente 10, 20 definiert. Eine zweite, in Strömungsrichtung gesehen axial hintere, azimuthal verlaufende Kante wird durch eine (erste) Abströmkante 12 gebildet. Die erste Leitvorrichtung 10 umfasst des Weiteren zwei seitliche, d. h. in Umfangsrichtung beabstandete Kanten 13 auf. Die Kanten 13 bilden Kanten zu den Wandelementen 30 und dabei Begrenzungen der azimuthalen Leitwand 11.

Die zweiten Leitvorrichtungen 20 umfassen ebenfalls eine (zweite) azimuthale Leitwand 21 und zwei Wandelemente 30. Die azimuthale Leitwand 21 wird dabei durch vier Begrenzungslinien bzw. Kanten definiert. Eine erste, axial vordere Kante wird durch die in Umfangsrichtung verlaufende Kante 16 gebildet. Eine zweite, axial hintere Kante wird durch eine (zweite) Abströmkante 22 gebildet. Des Weiteren sind zwei seitliche Kanten 23 zu den Wandelementen 30 vorgesehen.

Die Wandelemente 30 verbinden jeweils eine erste Leitvorrichtung 10 und eine zweite Leitvorrichtung 20 miteinander und sind dabei Teil beider Leitvorrichtungen 10, 20 insofern, als jedes Wandelement 30 eine erste Kante 13 zu einer der ersten Leitwände 11 und eine zweite Kante 23 zu einer der zweiten Leitwände 21 aufweist. Jedes Wandelement 30 umfasst des Weiteren eine stirnseitige Abströmkante 31. Die beiden Kanten 13, 23 eines Wandelementes divergieren in axialer Richtung.

Es wird darauf hingewiesen, dass die ersten Leitvorrichtungen 10 radial einwärts und die zweiten Leitvorrichtungen 20 radial auswärts bezogen auf die Strömungsrichtung geneigt sind. Es ist jedoch ebenso eine entgegengesetzte Ausrichtung der Leitvorrichtungen 10, 20 möglich.

Es ist vorgesehen, dass die Wandelemente 30 in axialer Richtung einen gekrümmten Verlauf besitzen, d.h. sich nicht geradlinig zwischen der Kante 16 und der stirnseitigen Abströmkante 31 erstrecken. Vielmehr besitzen die Kanten 13, 23 der Wandelemente 30 eine Krümmung, wobei der Krümmungsgrad der durch sie definierten Kurve von der axialen Position (x), die gleich der Strömungsrichtung ist, abhängt.

Hierzu ist im Ausführungsbeispiel der Figur 2 vorgesehen, dass die Wandelemente 30 angrenzend an einen Anfangspunkt 24, der an die Kante 16 angrenzt, und angrenzend an die stirnseitige Abströmkante 31 im Wesentlichen in axialer Richtung, d. h., in Strömungsrichtung verlaufen. Zwischen diesen Enden weist das Wandelement 30 dagegen einen gekrümmten Verlauf auf, der im Ausführungsbeispiel der Figur 2 einen Wendepunkt etwa auf der Hälfte zwischen dem Punkt 24 und der Abströmkante 31 besitzt. Im Bereich des Wendepunktes ist die Krümmung gleich Null.

Die Figur 3 zeigt die entsprechenden Strömungsverläufe an düsenartigen und diffusorartigen Leitvorrichtungen 10, 20. Zunächst ist gut zu erkennen, dass die Kanten 13, 23 jeweils von einem - gestrichelt dargestellten - geradlinigen Verlauf abweichen und etwa in der Mitte zwischen der Kante 16 und der Abströmkante 31 die Krümmung Null aufweisen.

Des Weiteren ist zu erkennen, dass die düsenartigen Leitvorrichtungen 10 und die diffusorartigen Leitvorrichtungen 20 am Düsenrand eine lokale Beschleunigung oder Verzögerung der vom Düsenrand abgehenden Strömung bewirken, wie schematisch durch Pfeile 40, die die Düsenströmung angeben, und Pfeile 41, die die Diffusorströmung angeben, angedeutet ist.

Die Leitelemente 10, 20 weisen jeweils eine Länge l in axialer Richtung und eine Breite b in Umfangsrichtung auf. Als Breite b wird dabei entsprechend der Figur 3 die Breite zweier aneinander angrenzender Leitvorrichtungen 10, 20 im Bereich der in Strömungsrichtung vorderen Kante 16 bezeichnet.

Die Eingangskrümmung der Kanten 13, 23 an der Kante 16 ist möglichst klein oder gleich Null, d. h. die Kanten 13, 23 stehen senkrecht auf der Kante 16. Die Ausgangskrümmung der Kanten 13, 23 an der axial hinteren Kante 12, 22 kann gleich Null oder von Null verschieden sein. Der Winkel der Kanten 13, 23 auf der Kante 12, 22 kann somit bei 90° liegen (bei einer Ausgangskrümmung von Null) oder verschieden von 90° sein (bei einer Ausgangskrümmung ungleich Null).

Die Figuren 3A bis 3C zeigen drei unterschiedliche Ausführungsbeispiele für den genauen Verlauf der Krümmung in der Figur 3 entlang der Kanten 13, 23 und damit entlang der durch die Kanten 13, 23 begrenzten Wandelemente 30.

Die Figur 3A zeigt die Kanten 13, 23 der Leitelemente am Beispiel einer Leitvorrichtung 20, die einen diffusorartigen Kanal ausbildet. Zusätzlich zu den Kanten 13, 23 ist die Krümmung k(x) in Abhängigkeit von der axialen Position x angegeben. Der Betrag der Krümmung ist dabei angegeben durch den Abstand, den die Kurve k(x) von den Kanten 13, 23 aufweist, und entspricht somit der Länge der in der Figur 3A angegebenen Verbindungslinien zwischen den beiden Kurven 13, 23 und k (x).

Es ist ersichtlich, dass die Krümmung am Anfangspunkt 24, der an die Kante 16 angrenzt, gleich Null ist. Die Krümmung nimmt anschließend bis zu einem Maximum 25 zu, das in etwa auf einem Viertel des Weges zwischen der axialen vorderen Kante 16 und der axial hinteren Kante 22 liegt, reduziert sich daran anschließend bis zu einem Wendepunkt 26 des Wandverlaufs auf den Wert Null, wobei der Wendepunkt des Wandverlaufs in etwa auf der Hälfte des Weges zwischen der axial vorderen Kante 16 der axial hinteren Kante 22 liegt, nimmt dann im negativen Bereich bis zu einem negativen Maximum 27 zu, das in etwa auf drei Viertel des Weges zwischen der axial vorderen Kante 16 und der axial hinteren Kante 22 liegt, und reduziert sich wieder auf Null an der Abströmkante 31, die in der gleichen Ebene wie die Kanten 22 und 12 liegt, vgl. Figuren 1 und 2.

Die Figur 3A zeigt somit ein Ausführungsbeispiel für einen Krümmungsverlauf, bei dem die Kanten 13, 23 und damit das Wandelement 30 in ihrer Krümmung einen Wendepunkt erfahren, wobei im Wendepunkt 26 die Krümmung gleich Null ist. Auch zeigt die Figur 3A ein Ausführungsbeispiel, bei dem sowohl die Eingangskrümmung im Bereich der Kante 16 als auch die Ausgangskrümmung im Bereich der Kante 22, 12 gleich Null ist, so dass die Kanten 13, 23 senkrecht auf den jeweiligen Kanten 16, 22, 12 liegen.

Die Figur 3B zeigt ein alternatives Ausführungsbeispiel, das sich vom Ausführungsbeispiel der Figur 3A dadurch unterscheidet, dass die Krümmung angrenzend an die stirnseitige Abströmkante 31 einen endlichen Wert a annimmt, d. h. der Winkel der Kanten 13, 23 auf der Kante 12, 22 ist ungleich 90°. Die Figur 3B zeigt somit ein Ausführungsbeispiel, bei dem lediglich die Eingangskrümmung der Kanten 13, 23 an der Kante 16 gleich Null ist, während die Ausgangskrümmung der Kanten 13, 23 an den Kanten 12, 22 von Null verschieden ist.

Figur 3C zeigt ein alternatives Ausführungsbeispiel, bei dem sowohl die Eingangskrümmung der Kanten 13, 23 an der Kante 16 als auch die Ausgangskrümmung der Kanten 13, 23 an den Kanten 12, 22 ungleich Null ist. Anschließend an die Kante 16 reduziert sich die Krümmung bis zum Wendepunkt 26 des Wandverlaufs und nimmt anschließend wieder zu.

Es wird darauf hingewiesen, dass die unterschiedlichen Krümmungen im dargestellten Verlauf der Kanten 13, 23 in den Figuren 3A, 3B, 3C nicht zu erkennen sind, da die Krümmung in den dargestellten Ausführungsbeispielen kleine Werte aufweist. So ist vorgesehen, dass der Betrag der maximalen Krümmung k bezogen auf den Durchmesser d des Düsenaustritts wie folgt definiert ist: k/d = 0,002 bis 0,05. Dies bedeutet bei einem typischen Durchmesser d am Düsenaustritt von 1 m, dass der Krümmungsradius, der gleich dem Kehrwert der Krümmung ist, zwischen 20 m und 500 m liegt.

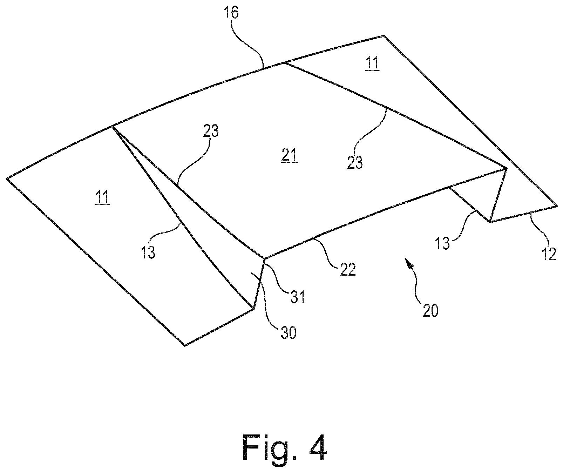

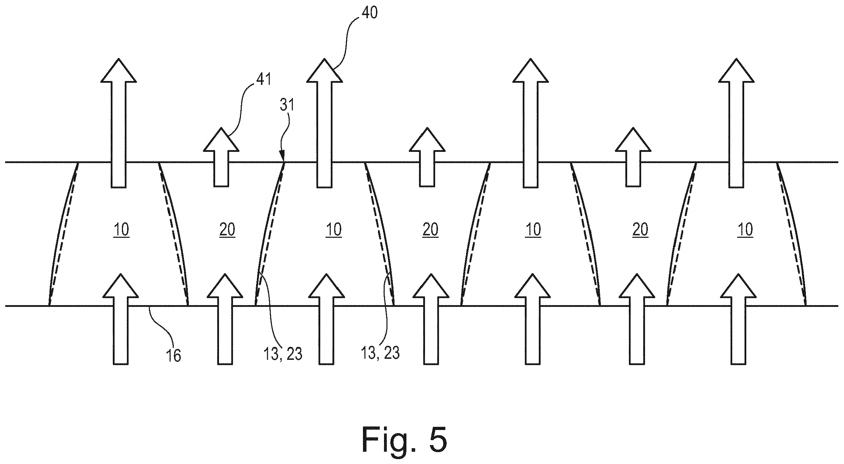

Die Figuren 4 und 5 zeigen ein alternatives Ausführungsbeispiel, bei dem die Wandelemente 30 ausgehend von der Kante 16 stetig gekrümmt sind. Der Krümmungsgrad kann dabei (wie in den Figuren 4 und 5 dargestellt) im Wesentlichen konstant sein, alternativ aber auch in Abhängigkeit von der axialen Position (x) variieren. Der Wandverlauf der Wandelemente 30 besitzt bei dieser Ausgestaltung keinen Wendepunkt, d.h. die Krümmung ist immer kleiner oder größer Null.

Die Ausführungsbeispiele der Figuren 1-3, 3A, 3B, 3C und 4-5 können dahingehend variiert werden, dass die Wandelemente 30 nicht, wie in den Figuren dargestellt, in radialer Richtung verlaufen, d. h., senkrecht auf der Düsenmantelfläche 4 stehen, sondern eine schräge Ausbildung mit einer radialen Komponente und einer Komponente in Umfangsrichtung besitzen.

Die Erfindung beschränkt sich in ihrer Ausgestaltung nicht auf die vorstehend erläuterten Ausführungsbeispiele, die lediglich beispielhaft zu verstehen sind. So sind die dargestellten Winkel und Größenverhältnisse der ersten und zweiten Leitvorrichtungen lediglich beispielhaft zu verstehen. Auch kann vorgesehen sein, dass die Abströmkanten 12, 22 abweichend von den Darstellungen der Figuren nicht in Umfangsrichtung verlaufen, sondern schräg zur Umfangsrichtung. Auch kann vorgesehen sein, dass die ersten und zweiten azimuthalen Leitwände eine unterschiedliche axiale Länge besitzen.

## Patentansprüche

1. Düse für eine Gasturbine mit einer Düsenmantelfläche (4) und einem Düsenrand (9), an dem in Umfangsrichtung abwechselnd erste und zweite Leitvorrichtungen (10, 20) angeordnet sind, wobei
- die ersten Leitvorrichtungen (10) düsenartig ausgebildet sind,
- die zweiten Leitvorrichtungen (20) diffusorartig ausgebildet sind,
- die ersten Leitvorrichtungen (10) jeweils eine erste azimuthale Leitwand (11) und zwei Wandelemente (30) umfassen, wobei die erste azimuthale Leitwand (11) eine erste Abströmkante (12) und zwei erste Kanten (13) zu den Wandelementen (30) ausbildet,
- die zweiten Leitvorrichtungen (20) jeweils eine zweite azimuthale Leitwand (21) und zwei Wandelemente (30) umfassen, wobei die zweite azimuthale Leitwand (21) eine zweite Abströmkante (22) und zwei zweite Kanten (13) zu den Wandelementen (30) ausbildet,
- die ersten und zweiten Leitvorrichtungen (10, 20) in Umfangsrichtung einander abwechselnd angeordnet sind,
- die ersten Leitwände (11) radial einwärts geneigt sind und die zweiten Leitwände (21) radial auswärts geneigt sind oder umgekehrt, und
- ein Wandelement (30) eine erste Leitvorrichtung (10) und eine zweite Leitvorrichtung (20) miteinander verbindet und Teil beider Leitvorrichtungen (10, 20) ist, wobei benachbarte Wandelemente (30) abwechselnd und paarweise in axialer Richtung konvergieren und divergieren und jedes Wandelement (30) eine erste Kante (13) mit einer der ersten Leitwände (11), eine zweite Kante (23) mit einer der zweiten Leitwände (21) und eine stirnseitige Abströmkante (31) aufweist, wobei beide, erste und zweite Kanten (13, 23) eines Wandelements (30) in axialer Richtung divergieren
**dadurch gekennzeichnet,**
**dass** die Wandelemente (30) in axialer Richtung einen gekrümmten Verlauf besitzen.

2. Düse nach Anspruch 1, **dadurch gekennzeichnet, dass** die Wandelemente (30) angrenzend an die Düsenmantelfläche (4) in axialer Richtung im Wesentlichen geradlinig verlaufen.

3. Düse nach Anspruch 1 oder 2, **dadurch gekennzeichnet, dass** die Wandelemente (30) angrenzend an ihre stirnseitige Abströmkante (31) in axialer Richtung im Wesentlichen geradlinig verlaufen.

4. Düse nach Anspruch 1 oder 2, **dadurch gekennzeichnet, dass** die Wandelemente (30) eine Krümmung aufweisen, die angrenzend an die stirnseitige Abströmkante (31) einen endlichen Wert annimmt.

5. Düse nach Anspruch 3, **dadurch gekennzeichnet, dass** die Wandelemente (30) angrenzend an die Düsenmantelfläche (4) und angrenzend an ihre stirnseitige Abströmkante (31) in axialer Richtung im Wesentlichen geradlinig und dazwischen gekrümmt verlaufen.

6. Düse nach Anspruch 4, **dadurch gekennzeichnet, dass** die Wandelemente (30) angrenzend an die Düsenmantelfläche (4) in axialer Richtung im Wesentlichen geradlinig und anschließend gekrümmt verlaufen, wobei die Krümmung angrenzend an die stirnseitige Abströmkante (31) einen endlichen Wert annimmt.

7. Düse nach einem der Ansprüche 1 bis 6, **dadurch gekennzeichnet, dass** die Wandelemente (30) in ihrem axialen Verlauf zwischen einem Anfangspunkt (24), der an die Düsenmantelfläche (4) angrenzt, und ihrer stirnseitigen Abströmkante (31) einen Wendepunkt in ihrer Krümmung erfahren.

8. Düse nach einem der Ansprüche 1 bis 6, **dadurch gekennzeichnet, dass** die Wandelemente (30) in ihrem axialen Verlauf zwischen einem Anfangspunkt (24), der an die Düsenmantelfläche (4) angrenzt, und ihrer stirnseitigen Abströmkante (31) stetig gekrümmt sind.

9. Düse nach einem der vorangehenden Ansprüche, **dadurch gekennzeichnet, dass** das Produkt aus dem Betrag der maximalen Krümmung (k) der Wandelemente (30) mit dem Durchmesser (d) des Düsenrands (9) im Bereich zwischen 0,002 und 0,05 liegt.

10. Düse nach einem der vorangehenden Ansprüche, **dadurch gekennzeichnet, dass** der Quotient (l/b) der Länge (l) der Leitvorrichtungen (10, 20) in axialer Richtung zu der Breite (b) der Leitvorrichtungen (10, 20) in Umfangsrichtung im Bereich zwischen 0,2 und 1 liegt.

11. Düse nach einem der vorangehenden Ansprüche, **dadurch gekennzeichnet, dass** der die relative Teilung der Leitvorrichtungen (10, 20) auf dem Düsenumfang definierende Quotient (b/d) von Breite (b) der Leitvorrichtungen (10, 20) in Umfangsrichtung zu dem Durchmesser (d) des Düsenrands (9) im Bereich zwischen 0,15 und 0,6 liegt.

12. Düse nach einem der vorangehenden Ansprüche, **dadurch gekennzeichnet, dass** die ersten Leitvorrichtungen (10) und/oder die zweiten Leitvorrichtungen (20) als Nachrüstsatz ausgebildet und an der Düsenmantelfläche (4) befestigt sind.

13. Düse nach einem der vorangehenden Ansprüche, **dadurch gekennzeichnet, dass** zumindest einige der ersten Abströmkanten (12) der ersten azimuthalen Leitwände (11) und/oder zumindest einige der zweiten Abströmkanten (22) der zweiten azimuthalen Leitwände (21) schräg zur Umfangsrichtung verlaufen, und/oder zumindest einige der ersten azimuthalen Leitwände (11) der ersten Leitvorrichtung (10) und zumindest einige der zweiten azimuthalen Leitwände (21) der zweiten Leitvorrichtung (20) eine unterschiedliche axiale Länge besitzen, so dass deren erste und zweite Abströmkanten (12, 22) eine unterschiedliche axiale Position besitzen.

14. Gasturbine mit einer Düse gemäß Anspruch 1.

## Claims

1. Nozzle for a gas turbine with an enveloping nozzle surface (4) and a nozzle rim (9), on which first and second guiding devices (10, 20) are alternatingly provided in the circumferential direction, where
- the first guiding devices (10) are of the nozzle-type design,
- the second guiding devices (20) are of the diffuser-type design,
- the first guiding devices (10) each have a first azimuthal guide wall (11) and two wall elements (30), with the first azimuthal guide wall (11) forming a first trailing edge (12) and two first edges (13) to the wall elements (30),
- the second guiding devices (20) each have a second azimuthal guide wall (21) and two wall elements (30), with the second azimuthal guide wall (21) forming a second trailing edge (22) and two second edges (13) to the wall elements (30),
- the first and second guiding devices (10, 20) are arranged alternatingly to one another in the circumferential direction,
- the first guide walls (11) are inclined radially inwards and the second guide walls (21) are inclined radially outwards, or vice versa, and
- a wall element (30) connects a first guiding device (10) and a second guiding device (20) while forming part of both guiding devices (10, 20), with adjacent wall elements (30) converging and diverging alternately and in pairs in the axial direction, with each wall element (30) having a first edge (13) to one of the first guide walls (11), a second edge (23) to one of the second guide walls (21) and a front-side trailing edge (31), with both first and second edges (12, 23) of a wall element (30) diverging in the axial direction,
**characterized in that**
the wall elements (30) have a curved course in the axial direction.

2. Nozzle in accordance with Claim 1, **characterized in that** the wall elements (30) adjoining the enveloping nozzle surface (4) run in the axial direction substantially in a straight line.

3. Nozzle in accordance with Claim 1 or 2, **characterized in that** the wall elements (30) adjoining their front-side trailing edge (31) run in the axial direction substantially in a straight line.

4. Nozzle in accordance with Claim 1 or 2, **characterized in that** the wall elements (30) have a curvature which assumes a finite value adjoining the front-side trailing edge (31).

5. Nozzle in accordance with Claim 3, **characterized in that** the wall elements (30) adjoining the enveloping nozzle surface (4) and adjoining their front-side trailing edge (31) run substantially in a straight line in the axial direction and in a curved line between those areas.

6. Nozzle in accordance with Claim 4, **characterized in that** the wall elements (30) adjoining the enveloping nozzle surface (4) run substantially in a straight line in the axial direction and then in a curved line, with the curvature adjoining the front-side trailing edge (31) assuming a finite value.

7. Nozzle in accordance with one of the Claims 1 to 6, **characterized in that** the wall elements (30) in their axial course between a starting point (24) adjoining the enveloping nozzle surface (4) and their front-side trailing edge (31) have a turning point in their curvature.

8. Nozzle in accordance with one of the Claims 1 to 6, **characterized in that** the wall elements (30) are steadily curved in their axial course between a starting point (24) adjoining the enveloping nozzle surface (4) and their front-side trailing edge (31).

9. Nozzle in accordance with one of the preceding Claims, **characterized in that** the product from the amount of the maximum curvature (k) of the wall elements (30) with the diameter (d) of the nozzle rim (9) is in the range between 0.002 and 0.05.

10. Nozzle in accordance with one of the preceding Claims, **characterized in that** the quotient (l/b) of the length (I) of the guiding devices (10, 20) in the axial direction to the width (b) of the guiding devices (10, 20) in the circumferential direction is in the range between 0.2 and 1.

11. Nozzle in accordance with one of the preceding Claims, **characterized in that** the quotient (b/d) of width (b) of the guiding devices (10, 20) in the circumferential direction to the diameter (d) of the nozzle rim (9), which quotient defines the relative pitch of the guiding devices (10, 20) on the nozzle circumference, is in the range between 0.15 and 0.6.

12. Nozzle in accordance with one of the preceding Claims, **characterized in that** the first guiding devices (10) and/or the second guiding devices (20) are provided as a retrofit kit and fastened to the enveloping nozzle surface (4).

13. Nozzle in accordance with one of the preceding Claims, **characterized in that** at least some of the first trailing edges (12) of the first azimuthal guide walls (11) and/ or at least some of the second trailing edges (22) of the second azimuthal guide walls (21) run obliquely to the circumferential direction, and/or at least some of the first azimuthal guide walls (11) of the first guiding device (10) and at least some of the second azimuthal guide walls (21) of the second guiding device (20) have a different axial length, such that their first and second trailing edges (12, 22) have a different axial position.

14. Gas turbine having a nozzle in accordance with Claim 1.

## Revendications

1. Tuyère pour une turbine à gaz avec une surface enveloppante de la tuyère (4) et un bord de tuyère (9) sur lequel sont disposés en alternance dans le sens circonférentiel des premiers et seconds dispositifs de guidage (10, 20), sachant que
- les premiers dispositifs de guidage (10) sont en forme de tuyère,
- les seconds dispositifs de guidage (20) sont en forme de diffuseur,
- les premiers dispositifs de guidage (10) comprennent chacun une première paroi de guidage azimutale (11) et deux éléments de paroi (30), sachant que la première paroi de guidage azimutale (11) forme un premier bord de fuite (12) et deux premiers bords (13) par rapport aux éléments de paroi (30),
- les seconds dispositifs de guidage (20) comprennent chacun une seconde paroi de guidage azimutale (21) et deux éléments de paroi (30), sachant que la seconde paroi de guidage azimutale (21) forme un second bord de fuite (22) et deux seconds bords (13) par rapport aux éléments de paroi (30),
- les premiers et seconds dispositifs de guidage (10, 20) sont disposés en alternance les uns à la suite des autres dans le sens circonférentiel,
- les premières parois de guidage (11) sont inclinées radialement vers l'intérieur et les secondes parois de guidage (21) sont inclinées radialement vers l'extérieur ou inversement, et
- un élément de paroi (30) relie ensemble un premier dispositif de guidage (10) et un second dispositif de guidage (20) et fait partie des deux dispositifs de guidage (10, 20), sachant que les éléments de paroi adjacents (30) convergent et divergent deux par deux et en alternance dans le sens axial et que chaque élément de paroi (30) présente un premier bord (13) avec une des premières parois de guidage (11), un second bord (23) avec une des secondes parois de guidage (21) et un bord de fuite frontal (31), sachant que les deux types de bords, aussi bien premiers que seconds (13, 23) d'un élément de paroi (30) divergent dans le sens axial,
**caractérisée en ce que**
les éléments de paroi (30) présentent une courbure dans le sens axial.

2. Tuyère selon la revendication n° 1, **caractérisée en ce que** les éléments de paroi (30) suivent essentiellement une ligne droite dans le sens axial, au voisinage de la surface enveloppante de la tuyère (4).

3. Tuyère selon la revendication n° 1 ou n° 2, **caractérisée en ce que** les éléments de paroi (30) suivent essentiellement une ligne droite dans le sens axial, au voisinage de leur bord de fuite frontal (31).

4. Tuyère selon la revendication n° 1 ou n° 2, **caractérisée en ce que** les éléments de paroi (30) présentent une courbure qui prend une valeur finie au voisinage du bord de fuite frontal (31).

5. Tuyère selon la revendication n° 3, **caractérisée en ce que** les éléments de paroi (30) au voisinage de la surface enveloppante de la tuyère (4) et au voisinage de leur bord de fuite frontal (31) suivent essentiellement une ligne droite dans le sens axial et sont incurvés entre les deux.

6. Tuyère selon la revendication n° 4, **caractérisée en ce que** les éléments de paroi (30) suivent essentiellement une ligne droite et ensuite une ligne courbée dans le sens axial, au voisinage de la surface enveloppante de la tuyère (4), sachant que la courbure prend une valeur finie au voisinage du bord de fuite frontal (31).

7. Tuyère selon une des revendications n° 1 à n° 6, **caractérisée en ce que** les éléments de paroi (30) dans leur tracé axial entre un point initial (24) qui avoisine la surface enveloppante de la tuyère (4) et leur bord de fuite frontal (31) font preuve d'un point d'inflexion dans leur courbure.

8. Tuyère selon une des revendications n° 1 à n° 6, **caractérisée en ce que** les éléments de paroi (30) dans leur tracé axial entre un point initial (24) qui avoisine la surface enveloppante de la tuyère (4) et leur bord de fuite frontal (31) sont courbés constamment.

9. Tuyère selon une des revendications précédentes, **caractérisée en ce que** le produit de la valeur de courbure maximale (k) des éléments de paroi (30) et le diamètre (d) du bord de tuyère (9) est compris entre 0,002 et 0,05.

10. Tuyère selon une des revendications précédentes, **caractérisée en ce que** le quotient (l/b) de la longueur (l) des dispositifs de guidage (10, 20) dans le sens axial sur la largeur (b) des dispositifs de guidage (10, 20) dans le sens circonférentiel est compris entre 0,2 et 1.

11. Tuyère selon une des revendications précédentes, **caractérisée en ce que** le quotient (b/d) de la largeur (b) des dispositifs de guidage (10, 20) dans le sens circonférentiel sur le diamètre (d) du bord de tuyère (9), définissant le pas relatif des dispositifs de guidage (10, 20) sur la circonférence de la tuyère, est compris entre 0,15 et 0,6.

12. Tuyère selon une des revendications précédentes, **caractérisée en ce que** les premiers dispositifs de guidage (10) et/ ou les seconds dispositifs de guidage (20) sont constitués sous la forme d'un kit de rattrapage et sont fixés sur la surface enveloppante de la tuyère (4).

13. Tuyère selon une des revendications précédentes, **caractérisée en ce qu'**au moins quelques-uns des premiers bords de fuite (12) des premières parois de guidage azimutales (11) et/ ou au moins quelques-uns des seconds bords de fuite (22) des secondes parois de guidage azimutales (21) sont de biais par rapport au sens circonférentiel et/ ou qu'au moins quelques-unes des premières parois de guidage azimutales (11) du premier dispositif de guidage (10) et au moins quelques-unes des secondes parois de guidage azimutales (21) du second dispositif de guidage (20) possèdent une longueur axiale différente si bien que leurs premiers et seconds bords de fuite (12, 22) possèdent une position axiale différente.

14. Turbine à gaz pourvue d'une tuyère selon la revendication n° 1.
